Europäisches Patentamt

European Patent Office

Office européen des brevets

(19)

(11) EP 0 938 999 A2

(12) EUROPÄISCHE PATENTANMELDUNG

(43) Veröffentlichungstag:
01.09.1999 Patentblatt 1999/35

(51) Int Cl.⁶: B60N 2/52

(21) Anmeldenummer: 99101529.8

(22) Anmeldetag: 29.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 30.01.1998 DE 19803750

(71) Anmelder: Gudzulic, Miro, Dipl.-Ing. (FH)
82211 Herrsching (DE)

(72) Erfinder: Gudzulic, Miro, Dipl.-Ing. (FH)
82211 Herrsching (DE)

(54) **Vorrichtung für vollautomatische Gewichtseinstellung und Höhenmessung eines gefederten Personensitzes bzw. des Fahrzeugrades**

(57)    Die Erfindung schlägt eine Vorrichtung für vollautomatische Gewichtseinstellung und Höhenmessung eines gefederten Personensitzes bzw. des Fahrzeugrades insbesondere in einem Kraftfahrzeug vor.

Das Problem der vollautomatischen Gewichtseinstellung wird mit einem elektropneumatischen Servoblock, eingebaut direkt in den Kolben von der Luftfeder, gelöst. In den elektropneumatischen Servoblock befindet sich ein entsperrbares Rückschlagventil,, die die Luftfeder abdichtet. Vollautomatische Gewichtseinstellung erfolgt mit Hilfe eines Drucksensors.

Das Problem der "richtigen" Sitzhöhe wird über kontaktlose Höhensensoren (Ultraschall-, Infrarot-, Laserabstands- oder Radarsensor) ermittelt.

Durch Integration eines elektropneumatischen Servoblocks in den Kolben der Luftfeder, mit Druck- und Wegsensor entsteht eine kompakte Einheit.

Figur 1

**Beschreibung**

Die Erfindung betrifft eine Vorrichtung für eine vollautomatische Gewichtseinstellung und Höhenmessung eines gefederten Personensitzes bzw. Rades, insbesondere in einem Kraftfahrzeug, gemäß dem Oberbegriff des Patentanspruchs 1.

Als allgemein bekannt ist, daß der richtige Sitz einen entscheidenden Einfluß auf den menschlichen Körper nimmt, d. h. auf Skelett, der Muskeln und des Bindegewebes. Aus diesem Grund werden immer mehr Sitze in den LKW's, Bussen, Baumaschinen, schienengebundene Fahrzeuge und viele mehr, mit einer Luftfeder, die automatisch gesteuert wird, ausgerüstet.

Dabei besteht zum einen das Problem, daß Personen mit annähernd gleicher Körpergröße unterschiedliche Körpergewichte aufweisen können. Eine schwere Person wird somit stärker in den Sitz "einsinken", als eine gleich große Person mit geringerem Körpergewicht.

So besteht eine Aufgabe darin, daß der im wesentlichen von der Körpergröße abhängige Sollwert, der Istwert unabhängig von dem Körpergewicht der sitzenden Person eingehalten wird.

Aus der Praxis sind bereits gefederte Personensitze bekannt, bei denen eine automatische Gewichtseinstellung auf das Fahrergewicht sich einstellt.

Bei der bekannten Ausführung liegt das gemeinsame Prinzip zugrunde, daß über einen Steuerblock bestehend aus 2 Stück 2/2 Wege-Elektronikmagnetventilen, die durch ein- und abschalten, die Luftfeder be- oder entlüftet wird. Unter der Sitzfläche des verstellbaren Fahrersitzes verbirgt sich eine im Prinzip schemenförmige Konstruktion. Dort wird ein Winkelaufnehmer eingebaut, um jederzeit die erreichte Position zu erfassen. Die Fahrersitzhöhe wird nun indirekt erfaßt. Diese Anordnung hat Nachteile, daß man über zwei Elektromagnetventile die ganze Luftfeder dicht halten muß. Um eine 100 %ige Dichtigkeit zu erreichen, müssen Magnetspulen so dimensioniert sein, daß man einen Netzdruck von 17,5 bar, sowie zusätzliche Druckstöße bis 25 bar (wie bei der gefederten Rad und gefederten Achsen vorkommt) aushalten kann.

Bei den Druckstößen kann ein Überdruck entstehen, so daß ein Magnetventilsitz abhebt und dadurch ungewollt den Druck von der Luftfeder absinkt.

Heute wird das Problem durch immer größere Magnetspulen gelöst, was automatisch zum größeren Gewicht, Volumen und Preis solcher Vorrichtungen dieser Art führt. Bei der Erfindung liegt die Aufgabe zugrunde, eine Vorrichtung so zu bauen das unabhängig von Netzdruck und Druckstößen, nur über eine Dichtstelle, die Verbindung zwischen der Druckluftnetz zum Balgzylinder entsteht und gleichzeitig Elektromagnetventile von den Druckluftstößen entlastet.

Die Erfindung hat den Vorteil, daß alle Komponenten klein bleiben, dadurch ist es möglich, als Einheit in Luftfederkolben zu integrieren.

Die Erfindung wird nun anhand von Ausführungsbeispielen (Fig. 1 - 4) unter Bezug auf Zeichnungen erläutert.

Fig. 1: Die Vorrichtung weist nur eine Dichtstelle zwischen Luftfeder (1) und Druckluftnetz (P) als elektropneumatischer Servoblock (2) auf.

Fig. 2: Die Vorrichtung weist Servoblock (2) integriert in den Kolben (15) der Luftfeder (1) auf, wobei der kontaktlose Wegsensor (10) über eine gemeinsame Elektroplatine (16) und einen Elektrostecker (13) verbunden ist. Die Druckluftversorgung für Servoblock (2) erfolgt über einen Druckluftschlauch (18).

Fig. 3: Die Vorrichtung weist Steuerblock (22) mit zwei Magnetventilen (5 und 23) als Dichtstelle über das Magnetventil (23) auf.

Fig. 4: Die Vorrichtung weist den Steuerblock (22) integriert in den Kolben (15) der Luftfeder (1) mit Elektrostecker (9) und Druckluftleitung (14).

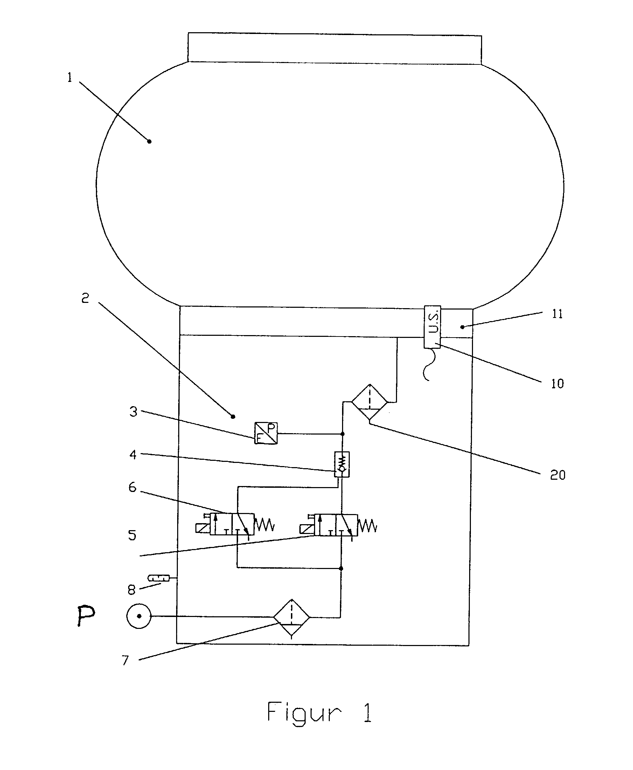

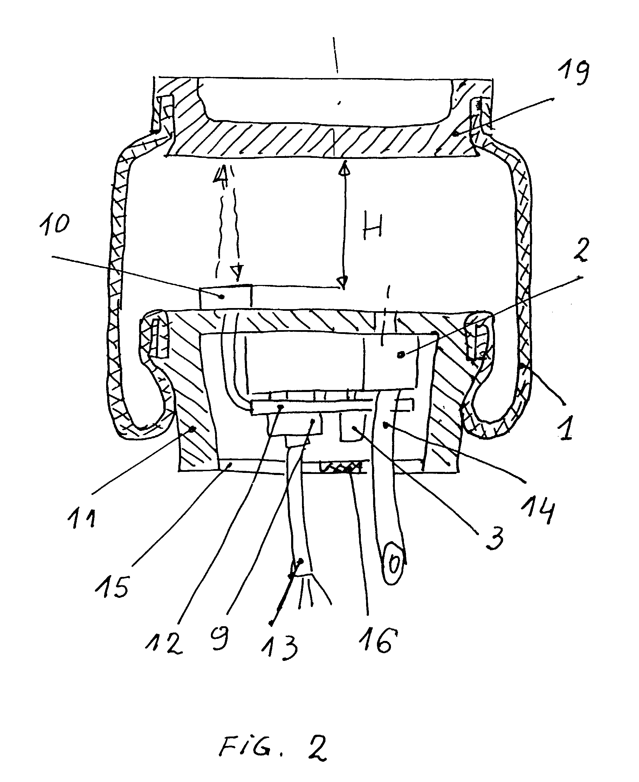

Die Aufgabe wird gelöst mit dem Anspruch 1 enthaltene Vorrichtung. Weitere vorteilhafte Ausführungsformen der Erfindung sind in den Unteransprüchen angegeben. Die Fig. 1 zeigt den gesamten Aufbau des elektropneumatischen Servoblockes (2). Der elektropneumatische Servoblock (2) bildet die Einheit mit dem Kolben (11) von der Luftfeder (1) wie auf der Fig. 2 dargestellt ist.

Um den Fahrersitz zu erhöhen, wird das Magnetventil (5) eingeschaltet und die Druckluft strömt vom Druckluftnetz (P) über entsperrbaren Rückschlagventil (4) und der Druck in der Luftfeder (1) steigt. Nach dem Erreichen der gewünschten Position, wird das Magnetventil (5) ausgeschaltet und gleichzeitig entweicht die Restluft zwischen Magnetventil (5) und entsperrbaren Rückschlagventil (4) über Schalldämpfer (8). Der erreichte Druck in der Luftfeder wird über den Drucksensor (3) gemessen und anschließend in der Steuerelektronik gespeichert.

Durch Einbau eines entsperrbaren Rückschlagventils (4) entsteht nur eine einzige Dichtstelle zwischen Luftfeder (1) und der Druckluftnetz (P). Dadurch das der Druck aus der Luftfeder (1) auf den Sitz des entsperrbaren Rückschlagventils (4) wirkt, erhöht sich die Systemsicherheit automatisch, d. h. etwaige Druckstöße wirken sogar positiv auf die Dichtigkeit des elektropneumatisches Servoblocks (2). Die beiden Magnetventile (5 und 6) sind vollkommen entlastet. Das entsperrbare Rückschlagventil (4) ist so dimensioniert, daß es einen viel größeren Querschnitt besitzt und dadurch unempfindlich gegen verunreinigter Durckluft ist.

Die Entlüftung von der Luftfeder (1) erreicht man über das Einschalten des Magnetventils (6), so daß die Druckluft vom Anschluß (P) über Magnetventil (6) strömt und wirkt auf das entsperrbare Rückschlagventil (4). Dadurch gibt es freien Durchgang für die Druckluft vom Luftfeder (1) über das Magnetventil (5) und den Schalldämpfer (8) ins Freie.

Wenn eine Sitzposition erreicht ist, wird ein Signal über Drucksensor (3) an die Steuerelektronik weitergeleitet und als feste Größe gespeichert, so daß jeder

2

Fahrer seine vorher eingespeicherter Position erreichen kann.

Um den ganzen elektropneumatischen Servoblock (2) von Verunreinigungen zu schützen, wird hinter Hauptanschluß (P) ein Druckfilter (7) integriert.

Von den Verunreinigungen, die in der Luftfeder (1) entstehen, wird der elektropneumatische Servoblock (2) mit einem integrierten Filter (20) geschützt. Gemäß einer weiteren in Fig. 2 dargestellten Ausführungsform der Erfindung wird der elektropneumatische Servoblock (2) mit einer Elektroplatine (12), einem kontaklosen Höhensensor (10), einem Steckverbinder (9) in den Kolben (11) als eine Einheit integriert.

Durch Integration in den Kolben (11) der Luftfeder (1) entsteht lediglich eine elektrische Verbindung über den Stecker (9) und des Kabels (13), sowie eine Druckluftversorgung über Druckluftleitung (14). Dadurch werden mehrere elektrische und pneumatische Verbindungen als mögliche Störungsquellen vermieden werden. Als kontaktloser Höhensensor (10) wird ein Ultraschallsenosr vorgesehen, der den Abstand (H) zwischen Kolben (11) und Spannplatte (19) der Luftfeder (1) mißt und über die Elektroplatine (12), dem Stecker (9) und des Kabels (13) zur Elektronik weiterleitet. Diese Information dient dazu, um eine genauere Sitzposition des Fahrers zu bestimmen.

Der Abstand (Sitzhöhe H) errechnet sich aus Formel:

$$H - \tfrac{1}{2} \times C \times T$$

wobei ist:

H -Abstand (Sitzhöhe): C - Schallgeschwindigkeit (343 m/s.)
T - Reflektionszeit

Zum Vorteil werden neben Ultraschallsensoren auch Laserabstandssenor, Infrarotsensor oder Radarabstandssensor eingesetzt. Die ganze Einheit wird mit einer Abdeckung gegen Schmutz und andere Einflüsse verschlossen. Alle Anschlüsse der Magnetventile (5 und 6), des Drucksensors (3) und des Ultraschallsensors (10) werden direkt mit der Elektroplatine (12) verbunden bzw. eingesteckt.

Als Steckverbinder (9) dient ein mehrpoliger Stecker, dessen Gegenstück sich auf der Elektroplatine befindet. Wenn in dem Fahrzeug ein Bussystem vorhanden ist, wird ein passender Busstecker verwendet. Durch Verwendung von Bussystemen werden gleichzeitig Installationskosten gesenkt und die Kommunikation mit der Steuerungselektronik vereinfacht. Um das Eindringen von Feuchtigkeit in das System zu verhindern und Luftdurchlässigkeit (Druckausgleich in das System) zur Elektronik zu ermöglichen, wird auf der Abdeckung (15) ein Druckauslgeichssystem (DAE) in Form als selbstklebende Membranfolie angebracht.

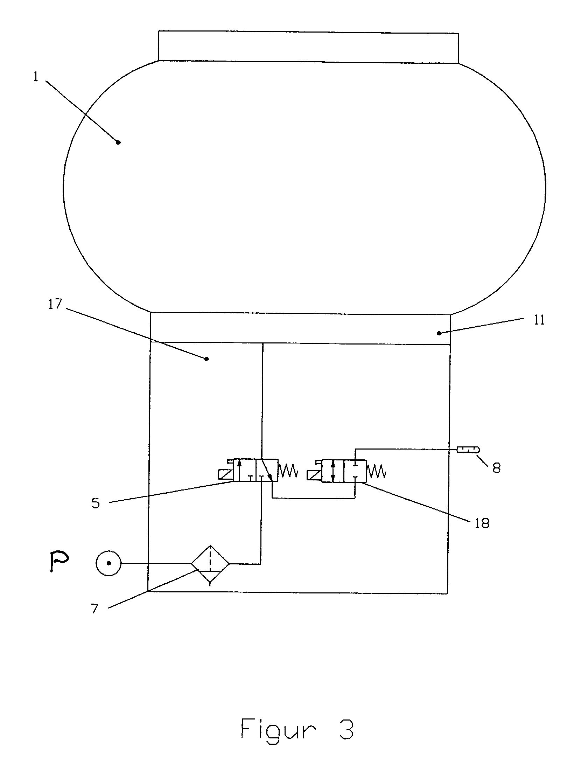

Auf der Fig. 3 ist ein Steuerblock (17) mit 2 Stück Mangetventilen dargestellt. Von dem Druckluftnetz (P) wird Druckluft der 3/2 Magnetventil (5) zugeführt. Gleichzeitig besteht eine Verbindung zwischen der Luftfeder (1) über das Magnetventil (5) zum Magnetventil (18), wo sich die Dichtstelle befindet.

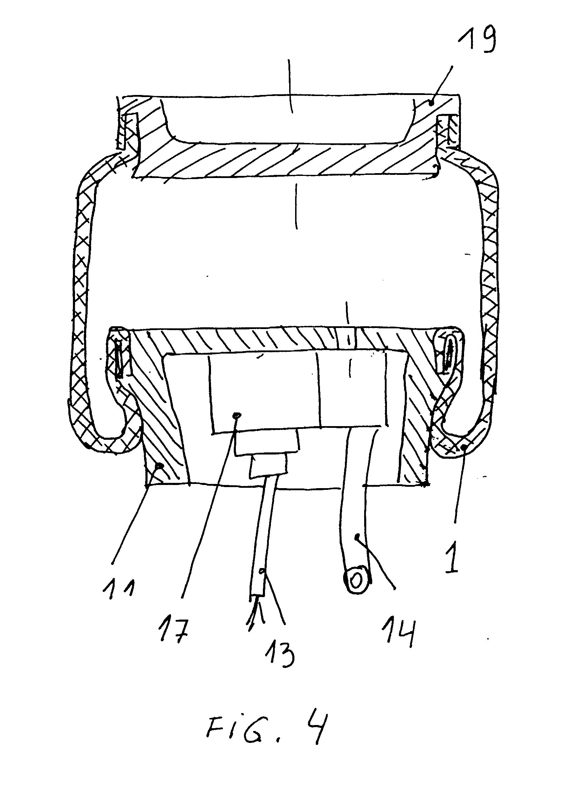

Durch Einschalten des Magnetventils (5) strömt die Luft zur Luftfeder (1) und der Fahrersitz wird angehoben. Durch Abschalten des Magnetventils (5) wird weiterer Zustrom von der Drückluft gesperrt und gleichzeitig wird das Magnetventil (18) dicht gehalten. Um eine niedrige Position des Fahrersitzes zu erreichen, wird das Magnetwentil (18) eingeschaltet und die Luft aus der Luftfeder (1) strömt über die Schalldämpfer (8) ins Freie. Wenn die gewünschte Position erreicht ist, wird das Magnetventil (18) abgeschaltet und die Verbindung zwischen Luftfeder (1) und der Schalldämpfer (8) ist zu. Auf der Fig. 4 wird Steuerblock (17) in den Kolben (11) der Luftfeder (1) mit dem Elektrostecker (9) und der Druckluftversorgung über die Druckluftleitung (14) dargestellt.

## Patentansprüche

1. Vorrichtung (2, 10, 12, 17) für vollautomatische Gewichtseinstellung und Hubmessung (H) eines gefederten Personensitzes insbesondere in einem Kraftfahrzeug angeordnet in den Kolben (11) der Luftfeder (1) ist dadurch gekennzeichnet, daß in einem elektropneumatischen Servoblock (2) ein entsperrbares Rückschlagventil (4), als Dichtstelle zwischen Luftfeder (1) und Druckluftnetz (P) mit zwei Magnetventilen (5 und 6) und einen Drucksensor (3), die als eine Einheit in den Kolben (11) der Luftfeder (1) mit den Höhensensor (10) über der Elektroplatine (12) und gemeinsamer Elektrostekker (9) und Druckluftanschluß (14) angeordnet ist.

2. Vorrichtung nach Anspruch 1, dadurch gekennzeichnet, daß Steuerblock (17) bestehend aus Magnetventilen (5 und 18) und gemeinsamen Elektrostecker (9) und Druckluftleitung (14) in den Kolben (11) der Luftfeder (1), als Dichtstelle ausgebildetet ist.

3. Vorrichtung nach Anspruch 1 und 2, dadurch gekennzeichnet, daß Höhensensor (10) als Ultraschallsensor in den Kolben (11) der Luftfeder (1) mit Elektroplatine (12) und Elektrostecker (9) mit Kabel (13) ausgebildet ist.

4. Vorrichtung nach Anspruch 1- 3, dadurch gekennzeichnet, daß lediglich nach außen nur eine Elektro- (13) und Druckluftleitung (14) angeordnet ist.

5. Vorrichtung nach Anspruch 1 - 4, dadurch gekennzeichnet, daß elektrische Anschlüsse von der Drucksensor (3), Mangetventilen (5 und 6) und Höhensensor (10) an der Elektroplatine (12) angeordnet sind.

6. Vorrichtung nach Anspruch 1- 5, dadurch gekennzeichnet, daß Höhensensor (14) vorteilhaft, als Infrarotsensor oder Laserabstandsensor oder Radarabstandsensor ausgebildet ist.

7. Vorrichtung nach Anspruch 1- 6, dadurch gekennzeichnet, daß in den elektropneumatischen Servoblock (2) und Steuerblock (17) ein Druckluftfilter (7) angeordnet ist.

Figur 1

FIG. 2

Figur 3

FIG. 4